(19) Europäisches Patentamt / European Patent Office / Office européen des brevets

(11) **EP 4 752 958 A1**

(12) **EUROPEAN PATENT APPLICATION**

(43) Date of publication:
**03.06.2026 Bulletin 2026/23**

(21) Application number: **25219328.9**

(22) Date of filing: **28.11.2025**

(51) International Patent Classification (IPC):
*H01M 4/133* (2010.01)    *H01M 4/134* (2010.01)
*H01M 4/1393* (2010.01)    *H01M 4/1395* (2010.01)
*H01M 4/36* (2006.01)    *H01M 4/38* (2006.01)
*H01M 4/587* (2010.01)    *H01M 4/62* (2006.01)
*H01M 10/04* (2006.01)    *H01M 10/0525* (2010.01)
*H01M 10/0587* (2010.01)    *H01M 4/02* (2006.01)

(52) Cooperative Patent Classification (CPC):
H01M 4/364; H01M 4/133; H01M 4/134;
H01M 4/1393; H01M 4/1395; H01M 4/366;
H01M 4/386; H01M 4/587; H01M 4/621;
H01M 4/624; H01M 4/625; H01M 10/0431;
H01M 10/0525; H01M 10/0587; H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
**BA**
Designated Validation States:
**GE KH LA MA MD TN**

(30) Priority: **29.11.2024 KR 20240175248**

(71) Applicant: **SAMSUNG SDI CO., LTD.
Yongin-si, Gyeonggi-do 17084 (KR)**

(72) Inventors:
• **CHOI, Woosung
  17084 Yongin-si, Gyeonggi-do (KR)**

• **DOO, JaeGyun
  17084 Yongin-si, Gyeonggi-do (KR)**
• **KIM, Haeju
  17084 Yongin-si, Gyeonggi-do (KR)**
• **HONG, Jayeon
  17084 Yongin-si, Gyeonggi-do (KR)**
• **JUNG, Meenkyoung
  17084 Yongin-si, Gyeonggi-do (KR)**

(74) Representative: **Michalski Hüttermann & Partner
Patentanwälte mbB
Kaistraße 16A
40221 Düsseldorf (DE)**

(54) **NEGATIVE ELECTRODE FOR RECHARGEABLE LITHIUM BATTERY, WOUND-TYPE ELECTRODE ASSEMBLY INCLUDING THE SAME, AND RECHARGEABLE LITHIUM BATTERY INCLUDING THE SAME**

(57)    The present disclosure relates to a negative electrode (20) for a rechargeable lithium battery (100), a wound-type electrode assembly (40) including the negative electrode, and a rechargeable lithium battery including the negative electrode. The present disclosure relates to a negative electrode for a lithium battery, the negative electrode including a negative electrode current collector (COL2), a first negative electrode active material layer (NAL1) on a first surface of the negative electrode current collector, and a second negative electrode active material layer (NAL2) and a third negative electrode active material layer (NAL3) stacked on a second surface of the negative electrode current collector.

FIG. 6

**Description**

CROSS-REFERENCE TO RELATED APPLICATION

This application claims priority under 35 U.S.C § 119 to Korean Patent Application No. 10-2024-0175248 filed on November 29, 2024 in the Korean Intellectual Property Office, the disclosure of which is hereby incorporated by reference in its entirety.

BACKGROUND

The present disclosure relates to a negative electrode for a rechargeable lithium battery, a wound-type electrode assembly including the negative electrode, and a rechargeable lithium battery including the negative electrode. More specifically, the present disclosure relates to the negative electrode for the rechargeable lithium battery in which negative electrode active material layers are asymmetrically formed on both surfaces of a negative electrode current collector, the wound-type electrode assembly including the negative electrode, and the rechargeable lithium battery including the negative electrode.

With increasing presence of battery-powered electronic devices such as, e.g., mobile phones, notebook computers, electric vehicles, and the like, the demand for rechargeable batteries with high energy density and large capacity is increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

SUMMARY

An example embodiment of the present disclosure includes a negative electrode for a rechargeable lithium battery having desired or improved dynamic characteristics, high capacity, and desired or improved lifespan characteristics.

An example embodiment of the present disclosure includes a wound-type electrode assembly having desired or improved dynamic characteristics, high capacity, and desired or improved lifespan characteristics.

According to an example embodiment of the present disclosure, a negative electrode for a rechargeable lithium battery may include a negative electrode current collector, a first negative electrode active material layer on a first surface of the negative electrode current collector, and a second negative electrode active material layer and a third negative electrode active material layer stacked, e.g., sequentially stacked, on a second surface of the negative electrode current collector. The first negative electrode active material layer may include a first carbon-based negative electrode active material and a first silicon-based negative electrode active material, the second negative electrode active material layer may include a second carbon-based negative electrode active material and a second silicon-based negative electrode active material, and the third negative electrode active material layer may include a third carbon-based negative electrode active material. The amount of the third carbon-based negative electrode active material in the third negative electrode active material layer may be greater than the amount of the first carbon-based negative electrode active material in the first negative electrode active material layer. The amount of the third carbon-based negative electrode active material in the third negative electrode active material layer may be greater than the amount of the second carbon-based negative electrode active material in the second negative electrode active material layer.

According to an example embodiment of the present disclosure, a wound-type electrode assembly may include a positive electrode, a negative electrode, and a separator between the positive electrode and the negative electrode. The negative electrode may include a negative electrode current collector, a first negative electrode active material layer on a first surface of the negative electrode current collector, and a second negative electrode active material layer and a third negative electrode active material layer stacked, e.g., sequentially stacked, on a second surface of the negative electrode current collector. The first negative electrode active material layer may include a first carbon-based negative electrode active material and a first silicon-based negative electrode active material, the second negative electrode active material layer may include a second carbon-based negative electrode active material and a second silicon-based negative electrode active material, and the third negative electrode active material layer may include a third carbon-based negative electrode active material. The amount of the third carbon-based negative electrode active material in the third negative electrode active material layer may be greater than the amount of the first carbon-based negative electrode active material in the first negative electrode active material layer. The amount of the third carbon-based negative electrode active material in the third negative electrode active material layer may be greater than the amount of the second carbon-based negative electrode active material in the second negative electrode active material layer.

According to an example embodiment of the present disclosure, a rechargeable lithium battery may include the wound-type electrode assembly.

BRIEF DESCRIPTION OF DRAWINGS

FIG. 1 illustrates a conceptual diagram showing a rechargeable lithium battery according to an example embodiment of the present disclosure.

FIGS. 2 to 5 illustrate simplified diagrams showing a rechargeable lithium battery according to an example embodiment of the present disclosure.

FIG. 6 illustrates a cross-sectional view showing a negative electrode according to an example embodiment of the present disclosure.

FIG. 7 illustrates a cross-sectional view showing a wound-type electrode assembly according to an example embodiment of the present disclosure.

FIG. 8 illustrates a cross-sectional view showing a negative electrode of a wound-type electrode assembly according to an example embodiment of the present disclosure.

DETAILED DESCRIPTION OF EMBODIMENTS

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be directly on the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The example embodiments described and illustrated herein include complementary variations.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

The phrases "A or B," "at least one of A and B," "at least one of A or B," "A, B, or C," "at least one of A, B, and C," and "at least one of A, B, or C" include any one or all possible combinations of the listed elements.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In some example embodiments, the average particle diameter may be determined by randomly or arbitrarily selecting 100 or more particles from an electron microscope image. Alternatively, the average particle diameter may be measured using a particle size analyzer and defined as the diameter corresponding to 50 vol% in a cumulative particle size distribution.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

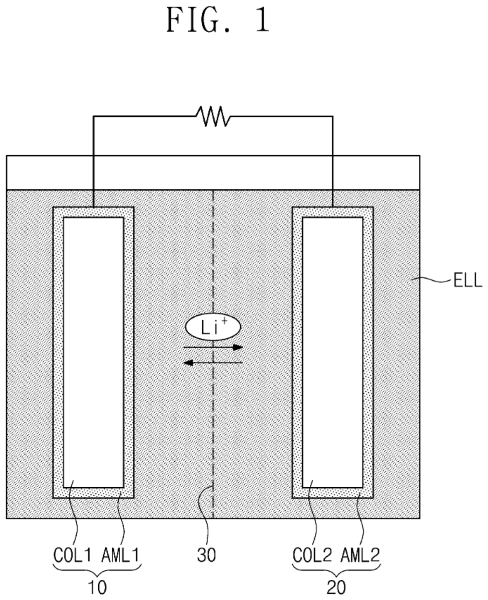

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

## Positive Electrode 10

The positive electrode 10 for a rechargeable lithium battery may include a current collector COL1, and a positive electrode active material layer AML1 formed on the current collector COL1. The positive electrode active material layer AML1 may include a positive electrode active material, and further include a binder and/or a conductive material.

For example, the positive electrode 10 may further include an additive that can constitute a sacrificial positive electrode.

An amount of the positive electrode active material may be in a range of $\geq 90$ wt% to $\leq 99.5$ wt% relative to 100 wt% of the positive electrode active material layer AML1. An amount of each of the binder and the conductive material may be in a range of $\geq 0.5$ wt% to $\leq 5$ wt% relative to 100 wt% of the positive electrode active material layer AML1.

The binder may improve attachment of positive electrode active material particles to each other, and improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause a chemical change in a battery may be used as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be used as the current collector COL1, but the present disclosure is not limited thereto.

## Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and a metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0<\alpha<2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0<\alpha<2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90 \leq a \leq 1.8$).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and $L^1$ may be or include at least one of Mn, Al, or a combination thereof.

For example, the positive electrode active material may be or include a high-nickel-based positive electrode active material having a nickel amount that is equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in lithium transition metal composite oxide. The high-nickel-based positive electrode active material may achieve high capacity and thus may be applied to a high-capacity and high-density rechargeable lithium battery.

**Negative Electrode 20**

The negative electrode 20 for a rechargeable lithium battery may include a current collector COL2 and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a range of $\geq 90$ wt% to $\leq 99$ wt%, a binder in a range of $\geq 0.5$ wt% to $\leq 5$ wt%, and a conductive material in a range of $\geq 0$ wt% to $\leq 5$ wt%.

The binder may improve attachment of negative electrode active material particles to each other, and to improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillatable polymer material, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause a chemical change in a battery may be used as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

**Negative Electrode Active Material**

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and a metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, $SiO_x$ (where $0<x<2$), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, $SnO_2$, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

## Separator 30

Based on a type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as at least one of a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one side, or on opposite sides, of the porous substrate, the coating layer includes an organic material, an inorganic material, or a combination thereof.

The porous substrate may be or include a polymer layer including one or more of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer, or may be present as a stack of a coating layer including the organic material and a coating layer including an inorganic material.

## Electrolyte (ELL)

The electrolyte ELL for a rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more solvents.

In addition, when a carbonate-based solvent is used, a cyclic carbonate and a linear carbonate may be mixed, and the cyclic carbonate and the linear carbonate may be mixed in a volume ratio in a range of $\geq$ 1:1 to $\leq$ 1:9.

The lithium salt may be or include a material that dissolves in the non-aqueous organic solvent to constitute a supply source of lithium ions in a battery, and contributes to enabling a basic operation of a rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

## Rechargeable Lithium Battery

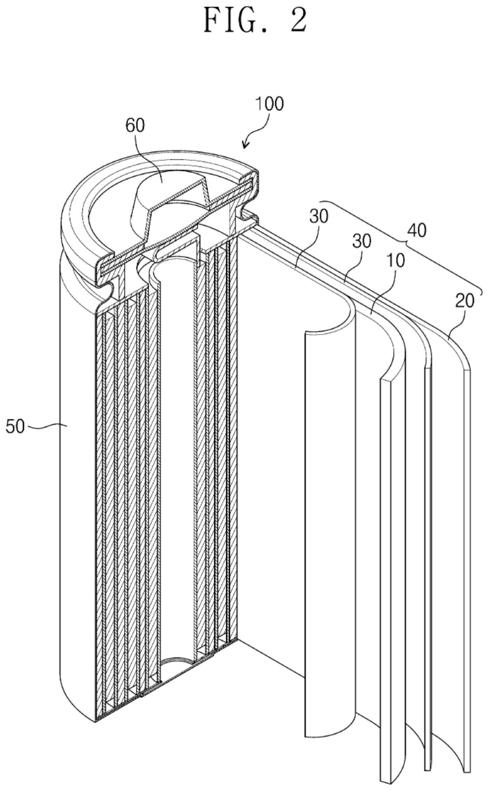

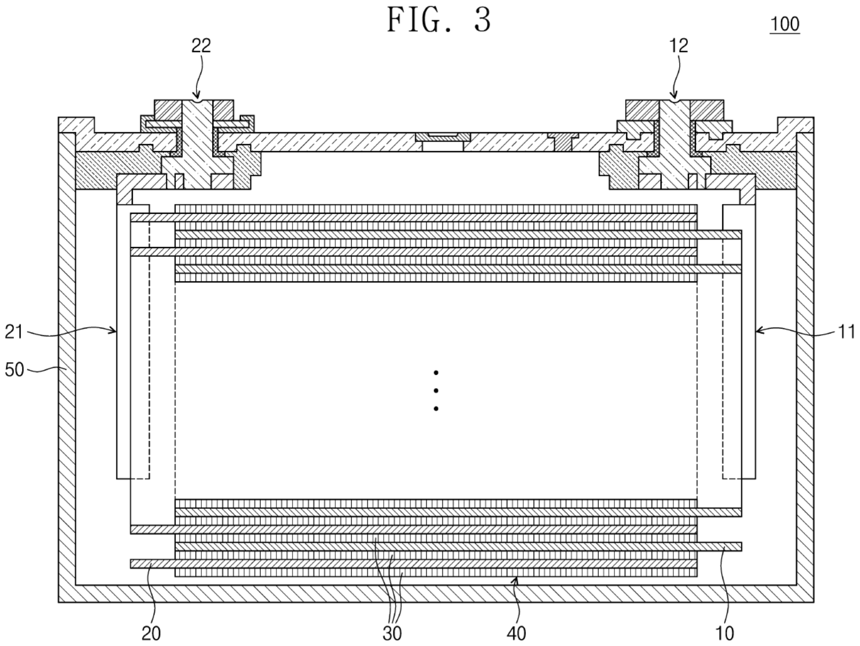

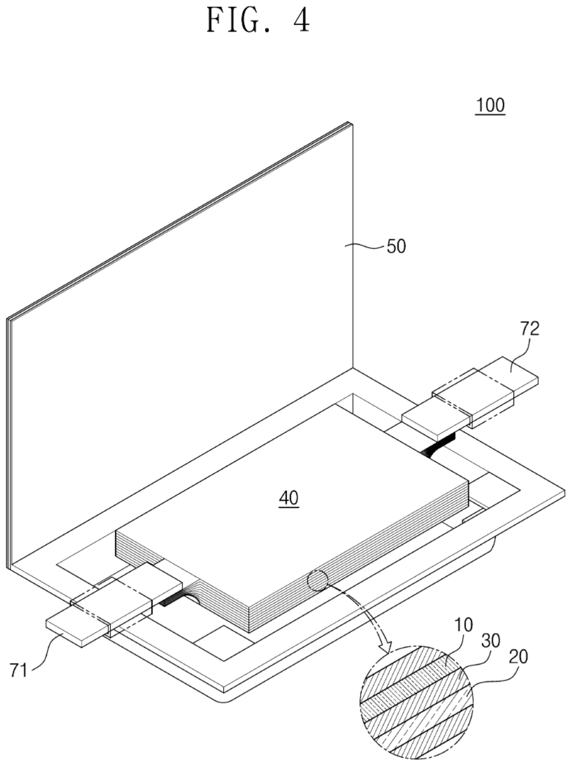

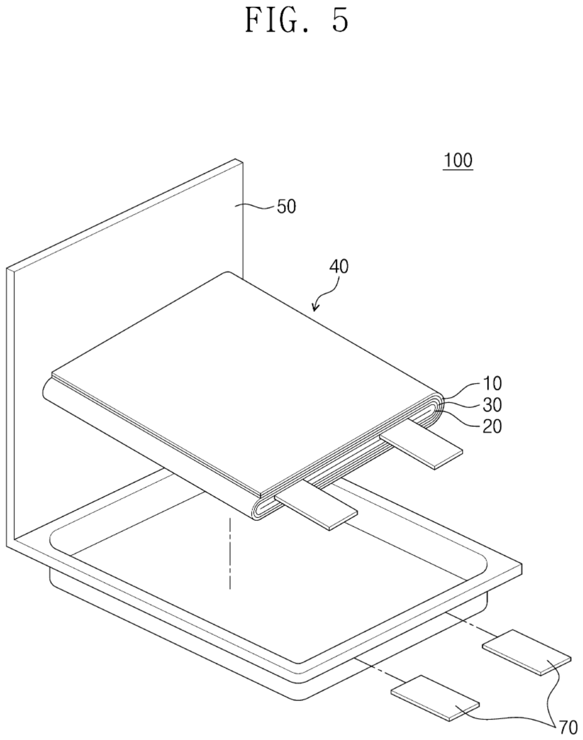

Based on a shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment, with FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

The lithium battery according to an example embodiment of the present disclosure can be applicable to, e.g., automobiles, mobile phones, and/or various types of electric devices, but is not limited thereto.

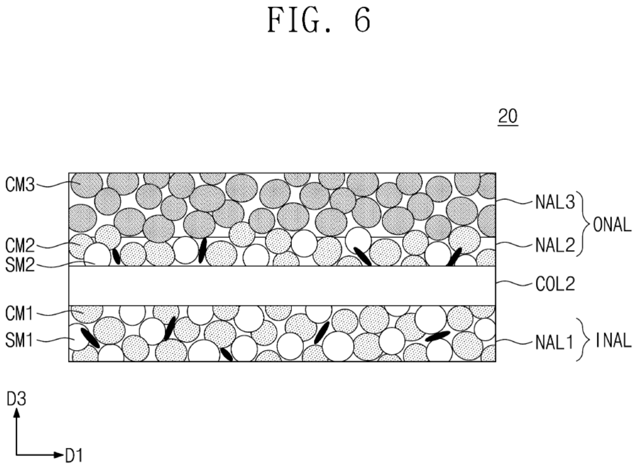

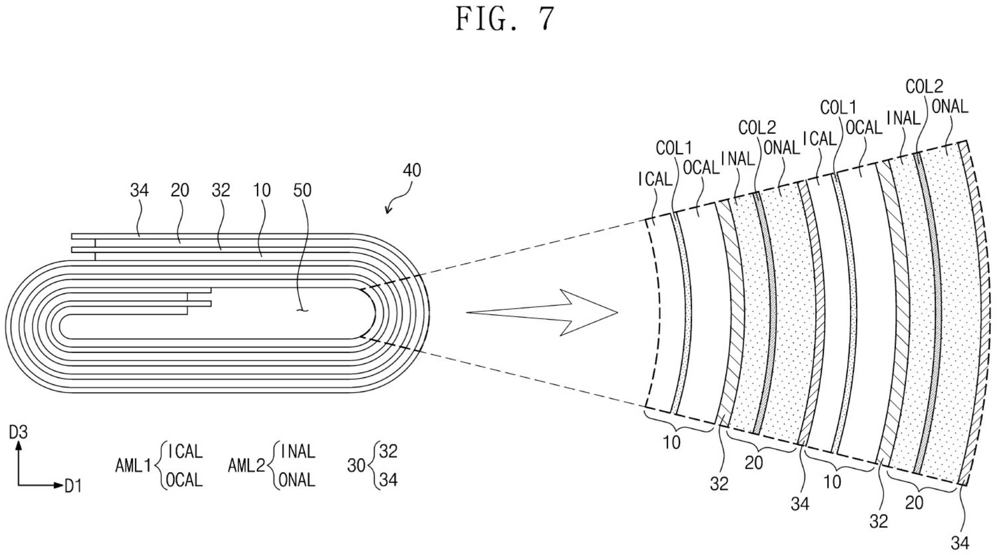

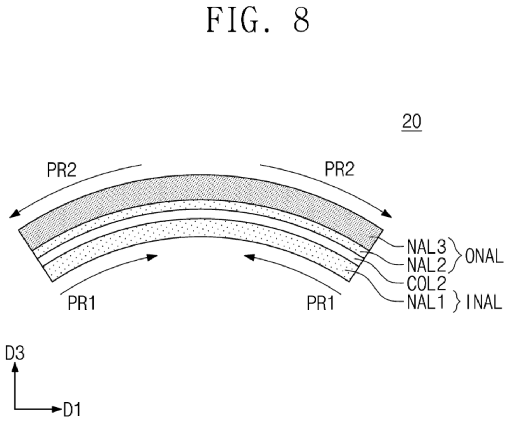

FIG. 6 illustrates a cross-sectional view showing a negative electrode 20 according to an example embodiment of the present disclosure. FIG. 7 illustrates a cross-sectional view showing a wound-type electrode assembly 40 according to an example embodiment of the present disclosure. FIG. 8 illustrates a cross-sectional view showing a portion of a negative electrode 20 included in a wound-type electrode assembly according to an example embodiment of the present disclosure. Hereinafter, a negative electrode 20, a wound-type electrode assembly 40 including the negative electrode 20, and a rechargeable lithium battery including the negative electrode 20 are described in more detail with reference to FIGS. 6 to 8.

Referring to FIG. 6, a negative electrode 20 for a rechargeable lithium battery according to example embodiments of the present disclosure may include a negative electrode current collector COL2, an inner negative electrode active material layer INAL on a first surface of the negative electrode current collector COL2, and an outer negative electrode active material layer ONAL on a second surface of the negative electrode current collector COL2. The inner negative electrode active material layer INAL may include a first negative electrode active material layer NAL1. The outer negative electrode active material layer ONAL may include a second negative electrode active material layer NAL2 and a third negative electrode active material layer NAL3.

The ratio of a thickness of the first negative electrode active material layer NAL1 to a thickness of the second negative electrode active material layer NAL2 may range from ≥ 2:1 to ≤ 1:2. The ratio of a thickness of the third negative electrode active material layer NAL3 to a thickness of the second negative electrode active material layer NAL2 may range from ≥ 2:1 to ≤ 1:2.

The negative electrode 20 for a rechargeable lithium battery according to example embodiments of the present disclosure may enhance the dynamic characteristics thereof and lifespan characteristics by asymmetrically forming negative electrode active material layers on the first and second surfaces, which are opposite to each other. Hereinafter, each of the negative electrode active material layers NAL1, NAL2, and NAL3 formed on each surface of the negative electrode current collector COL2 is described in more detail.

## First negative electrode active material layer NAL1

The first negative electrode active material layer NAL1 may include a first carbon-based negative electrode active material CM1 and a first silicon-based negative electrode active material SM1.

The first carbon-based negative electrode active material CM1 may include, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The first silicon-based negative electrode active material SM1 may include at least one of silicon, silicon-carbon

composite, $SiO_x$ (where $0<x \leq 2$), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) on a surface of the secondary particle. The amorphous carbon may also be present between the primary silicon particles, and for example, the primary silicon particles may be coated with the amorphous carbon. The secondary particles may be dispersed in an amorphous carbon matrix.

The weight ratio of the first carbon-based negative electrode active material CM1 to the first silicon-based negative electrode active material SM1 in the first negative electrode active material layer NAL1 may range from $\geq 60:40$ to $\leq 99:1$, $\geq 70:30$ to $\leq 98:2$, or $\geq 80:20$ to $\leq 98:2$. When the amount of the first silicon-based negative electrode active material SM1 in the first negative electrode active material layer NAL1 is too small, the capacity of the negative electrode may decrease, and an N/P reversal phenomenon may occur. When the amount of the first silicon-based negative electrode active material SM1 in the first negative electrode active material layer NAL1 is too large, the volume change of the negative electrode active material layer during charging and discharging may increase, leading to a degradation in the lifespan characteristics of the negative electrode 20. When the weight ratio of the first carbon-based negative electrode active material CM1 and the first silicon-based negative electrode active material SM1 satisfies the aforementioned range, the negative electrode 20 may exhibit desired or improved lifespan characteristics along with sufficient capacity.

The first negative electrode active material layer NAL1 may further include a conductive material. The conductive material may provide an electrode with conductivity, and any suitable conductive material that does not cause a chemical change in a battery may be used as the conductive material. The conductive material may include, for example, at least one of a carbon-based material, a metal-based material, conductive polymer, of a combination thereof.

The amount of the conductive material in the first negative electrode active material layer NAL1 may be less than or equal to 1% by weight relative to total weight of the first negative electrode active material layer NAL1. For example, the amount of the conductive material in the first negative electrode active material layer NAL1 may range from $\geq 0.01$ wt % to $\leq 1$ wt %, $\geq 0.02$ wt % to $\leq 0.5$ wt %, or $\geq 0.03$ wt % to $\leq 0.1$ wt %. In an example embodiment, the amount of the conductive material in the first negative electrode active material layer NAL1 may be 0.05% by weight relative with respect to the total weight of the first negative electrode active material layer NAL1.

In an example embodiment, a linear carbon-based conductive material may be included as the conductive material. The linear conductive material refers to a conductive material having a particle shape similar to a needle. For example, the linear conductive material may refer to a conductive material having an aspect ratio (the ratio of length to diameter) in a range of $\geq 10$ or more. The aspect ratio of the linear carbon-based conductive material may be, for example, in a range of $\geq 20$ to $\leq 700$, $\geq 50$ to $\leq 600$, $\geq 60$ to $\leq 300$, or $\geq 100$ to $\leq 300$. For example, the linear carbon-based conductive material may include at least one of carbon nanotube (CNT), vapor-grown carbon fiber (VGCF), carbon nanofiber (CNF), or a combination thereof.

When the first negative electrode active material layer NAL1 includes a linear carbon-based conductive material, the conductivity of the first negative electrode active material layer NAL1 may be improved and the volume expansion may be alleviated. The first negative electrode active material layer NAL1 includes a silicon-based negative electrode active material SM1 which has low conductivity and large volume change during charging and discharging. Since the linear carbon-based conductive material can rapidly transfer electrons through its needle-like structure, the conductivity of the negative electrode active material layer can be significantly improved with only a small amount of the linear conductive material. In addition, the linear carbon-based conductive material can physically compensate for the expansion of the silicon particles to stabilize the structure of the silicon particles and improve the lifespan of the negative electrode.

The first negative electrode active material layer NAL1 may further include a sphere-type carbon-based conductive material in addition to the linear carbon-based conductive material. The sphere-type conductive material may refer to a conductive material having a substantially spherical or elliptical particle shape. The sphere-type carbon-based conductive material may include, for example, at least one of carbon black, graphite powder, acetylene black, or a combination thereof.

The binder may improve attachment of negative electrode active material particles to each other, and improve attachment of the negative electrode active material to the current collector COL2. The binder may include a non-aqueous binder, an aqueous binder, a dry binder, or a combination thereof. The amount of the binder in the first negative electrode active material layer NAL1 may be in a range of $\geq 0$ wt % to $\leq 10$ wt %, $\geq 0.3$ wt % to $\leq 7$ wt %, or $\geq 0.5$ wt % to $\leq 5$ wt % relative to the total weight of the first negative electrode active material layer NAL1.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof. When an aqueous binder is used as the negative electrode binder, a cellulose-based compound capable of providing viscosity may further be included.

The dry binder may include at least one of polytetrafluoroethylene, polyvinylidene fluoride, polyvinyidene fluoride-hexafluoropropylene copolymer, polyethyleneoxide, or a combination thereof as a polymeric material capable of being fiberized.

## Second Negative Electrode Active Material Layer NAL2

The second negative electrode active material layer NAL2 may include a second carbon-based negative electrode active material CM2 and a second silicon-based negative electrode active material SM2.

The second carbon-based negative electrode active material CM2 may be the same as or similar to the first carbon-based negative electrode active material CM1 described above. For example, the second carbon-based negative electrode active material CM2 may include crystalline carbon, amorphous carbon, or a combination thereof. The second silicon-based negative electrode active material SM2 may be the same as, or similar to, the first silicon-based negative electrode active material SM1 described above. For example, the second silicon-based negative electrode active material SM2 may include at least one of silicon, silicon-carbon composite, $SiOx$ ($0 < x \leq 2$), or a combination thereof.

The weight ratio of the second carbon-based negative electrode active material CM2 to the second silicon-based negative electrode material SM2 in the second negative electrode active material layer NAL2 may range from $\geq 60:40$ to $\leq 99:1$, $\geq 70:30$ to $\leq 98:2$, or $\geq 80:20$ to $\leq 98:2$.

The second negative electrode active material layer NAL2 may further include a conductive material. The conductive material may be the same as or similar to the conductive material included in the first negative electrode active material layer NAL1. For example, the conductive material may include a linear carbon-based conductive material.

The amount of the conductive material in the second negative electrode active material layer NAL2 may be less than or equal to 1% by weight relative to the total weight of the second negative electrode active material layer NAL2. For example, the amount of the conductive material in the second negative electrode active material layer NAL2 may range from $\geq 0.01$ wt % to $\leq 1$ wt %, $\geq 0.02$ wt % to $\leq 0.5$ wt %, or $\geq 0.03$ wt % to $\leq 0.1$ wt %. In an example embodiment, the amount of the conductive material in the second negative electrode active material layer NAL2 may be 0.05% by weight relative to the total weight of the second negative electrode active material layer NAL2.

The second negative electrode active material layer NAL2 may further include a binder in addition to the negative electrode active material and the conductive material. The binder may be the same as or similar to the binder included in the first negative electrode active material layer NAL1. For example, the binder may include an aqueous binder such as at least one of styrene-butadiene rubber, (meth)acrylated styrene-butadiene rubber, (meth)acrylonitrile-butadiene rubber, or (meth)acrylic rubber, and may further include a cellulose-based compound capable of providing viscosity.

The second negative electrode active material layer NAL2 may have the same or similar composition as the first negative electrode active material layer NAL1. That is, each of the first and second negative electrode active material layers NAL1 and NAL2 may include a carbon-based negative electrode active material and a silicon-based negative electrode active material as negative electrode active materials, and may include a linear carbon-based conductive material as a conductive material. When the first and second negative electrode active material layers NAL1 and NAL2 have the same composition, the first and second negative electrode active material layers can be formed using a single nozzle, simplifying the manufacturing process of the negative electrode 20.

## Third negative electrode active material layer NAL3

The third negative electrode active material layer NAL3 may include a third carbon-based negative electrode active material CM3. The third carbon-based negative electrode active material CM3 may be the same as or similar to the first carbon-based negative electrode active material CM1 described above. For example, the third carbon-based negative electrode active material CM3 may include crystalline carbon, amorphous carbon, or a combination thereof. In an example embodiment, the third carbon-based negative electrode active material may include graphite such as non-shaped, sheet-shaped, flake-shaped, sphere-shaped, or fiber-shaped natural or artificial graphite.

The amount of the third carbon-based negative electrode active material CM3 in the third negative electrode active material layer NAL3 may be greater than the amount of the first carbon-based negative electrode active material CM1 included in the first negative electrode active material layer NAL1, and may be greater than the amount of the second carbon-based negative electrode active material CM2 included in the second negative electrode active materials layer NAL2. The amount of the third carbon-based negative electrode active material in the third negative electrode active material layer NAL3 may be greater than or equal to ≤ 90% by weight relative to the total weight of the third negative electrode active material layer NAL3. For example, the amount of the third carbon-based negative electrode active material may range from ≥ 90 wt % to ≤ 99 wt % or ≥ 95 wt % to ≤ 98 wt %.

The third negative electrode active material layer NAL3 may further include a third silicon-based negative electrode active material SM3 in addition to the third carbon-based negative electrode active material CM3. The third silicon-based negative electrode active material SM3 may be the same as or similar to the first silicon-based negative electrode active material SM1 described above. For example, the third silicon-based negative electrode active material SM3 may be or include at least one of silicon, a silicon-carbon composite, or a combination thereof.

The amount of the third silicon-based negative electrode active material SM3 in the third negative electrode active material layer NAL3 may be less than or equal to ≤ 5% by weight relative to the total weight of the third negative electrode active material layer NAL2. For example, the amount of the third silicon-based negative electrode active material SM3 may be in a range of ≥ 0 wt % to ≤ 5 wt %, or ≥ 0 wt % to ≤ 2 wt %. The amount of the third silicon-based negative electrode active material SM3 in the third negative electrode active material layer NAL3 may be less than the amount of the first silicon-based negative electrode active material SM1 in the first negative electrode active material layer NAL1, and may be less than the amount of the second silicon-based negative electrode active material SM2 in the second negative electrode active material layer NAL2.

In other words, the third negative electrode active material layer NAL3 may contain a small amount of a silicon-based negative electrode active material, or may not contain a silicon-based negative electrode active material at all. Since the third negative electrode active material layer NAL3 contains 5 wt % or less of a silicon-based negative electrode active material, the third negative electrode active material layer NAL3 may exhibit reduced or minimal volume change during charging and discharging, resulting in desired or improved lifespan characteristics.

The third negative electrode active material layer NAL3 may further include a conductive material. The conductive material may include, for example, a carbon-based material, a metal-based material, a conductive polymer, or a combination thereof.

The amount of the conductive material in the third negative electrode active material layer NAL3 may range from ≥ 0% to ≤ 10% by weight, ≥ 0.01% to ≤ 5% by weight, or ≥ 0.05% to ≤ 3% by weight relative to the total weight of the third negative electrode active material layer NAL3.

The third negative electrode active material layer NAL3 may further include a binder in addition to the negative electrode active material and the conductive material. The binder may be the same as or similar to the binder included in the first negative electrode active material layer NAL1. For example, the binder may include an aqueous binder such as at least one of styrene-butadiene rubber, (meth)acrylated styrene-butadiene rubber, (meth)acrylonitrile-butadiene rubber, (meth) acrylic rubber and may further include a cellulose-based compound capable of providing viscosity.

**Electrode Assembly 40**

Referring to FIG. 7, an electrode assembly according to example embodiments of the present disclosure may be or include a wound-type electrode assembly 40. The wound electrode assembly 40 may refer to an electrode assembly in which a sheet-type negative electrode 20, a sheet-type positive electrode 10, and a sheet-type separator 30 are wound in a spiral shape. For example, the wound-type electrode assembly 40 may include a sheet-type negative electrode 20 in which negative electrode active material layers are supported on both sides of a negative electrode current collector, a sheet-type positive electrode 10 in which positive electrode active material layers are supported on both sides of a positive electrode current collector, and sheet-type separators 32 and 34 disposed between the positive electrode 10 and the negative electrode 20.

The sheet-type negative electrode 20 may be the negative electrode described above with reference to FIG. 6. In other words, the sheet-type negative electrode 20 may include the negative electrode current collector COL2, the inner negative electrode active material layer INAL on the first surface of the negative electrode current collector COL2, and the outer negative electrode active material layer ONAL on the second surface of the negative electrode current collector COL2. The inner negative electrode active material layer INAL may include the first negative electrode active material layer NAL1, and the outer negative electrode active material layer ONAL may include the second negative electrode active material layer NAL2 and the third negative electrode active material layer NAL3.

The sheet-type positive electrode 10 may include a positive electrode current collector COL1, an inner positive electrode active material layer ICAL on a first surface of the positive electrode current collector COL1, and an outer positive electrode active material layer OCAL on a second surface of the positive electrode current collector COL1.

The wound-type electrode assembly 40 may have a structure in which a unit structure, stacked, e.g., sequentially stacked, with the inner positive electrode active material layer ICAL/ positive electrode current collector COL1/ outer positive electrode active material layer OCAL/ first separator 32/ inner negative electrode active material layer INAL/ negative electrode current collector COL2/ outer negative electrode active material layer ONAL/ and second separator 34, is wound in such a way that the inner positive electrode active material layer ICAL and the inner negative electrode active material layer INAL face the winding core 50 of the wound-type electrode structure.

In the wound-type electrode assembly 40, the outer positive electrode active material layer OCAL may be positioned farther from the winding center 50 of the electrode assembly than the inner positive electrode active material layer ICAL. In one example embodiment, the loading level of the outer positive electrode active material layer OCAL may be the same as or greater than the loading level of inner positive electrode active material layer ICAL. For example, the ratio of the loading level of the outer positive electrode active material layer OCAL to the loading level of the inner positive electrode active material layer ICAL may range from $\geq$ 1 to 4, $\geq$ 1 to 3, or $\geq$ 1.1 to 2.5. The loading level may refer to the amount of the positive electrode active material loaded on the positive electrode, and may represent the mass of the positive electrode active material per unit area.

In the wound-type electrode assembly 40, the outer negative electrode active material layer ONAL may be positioned farther from the winding center 50 of the electrode assembly than the inner negative electrode active material layer INAL. That is, the second and third negative electrode active material layers NAL2 and NAL3 may be positioned farther from the winding center 50 of the electrode assembly than the first negative electrode active material layer NAL1. The third negative electrode active material layer NAL3 may be positioned farther from the winding center 50 of the electrode assembly than the second negative electrode active material layer NAL2. In other words, the first negative electrode active material layer NAL1 may be positioned closest to the winding center 50, and the third negative electrode active material layer NAL3 may be positioned farthest from the winding center.

The first negative electrode active material layer NAL1, i.e., the inner negative electrode active material layer INAL, which is positioned closest to the winding center 50 of the wound-type electrode assembly may require a relatively low loading level while maintaining desired or improved capacity.

The inner negative electrode active material layer INAL may face the outer positive electrode active material layer ONAL with the first separator 32 interposed therebetween. When the capacity of the inner negative electrode active material layer INAL is not sufficient, an N/P reversal phenomenon may occur. When the N/P reversal phenomenon occurs, lithium dendrites may form, leading to a decrease in battery capacity and a reduction in the thermal stability of the cell.

When the loading level is increased to improve the capacity of the inner negative electrode active material layer INAL, the increased loading level may help reduce or prevent the N/P reversal phenomenon. However, increasing the loading level may also lead to an increased ion diffusion distance within the negative electrode active material layer and higher electron transport resistance, which may degrade the dynamic characteristics of the negative electrode 20. This may lead to a decrease in the charging rate of the battery and a decrease in the uniformity of the reaction.

Since the inner negative electrode active material layer INAL according to example embodiments of the present disclosure contains a certain amount of silicon as a negative electrode active material, the inner negative electrode active material layer INAL may exhibit desired or improved capacity even at a relatively low loading level.

For example, the inner negative electrode active material layer INAL may include a first carbon-based negative electrode active material and a first silicon-based negative electrode active material as negative electrode active material. The weight ratio of the first carbon-based negative electrode active material to the first silicon-based negative electrode active material may range from $\geq$ 60:40 to $\leq$ 99:1, $\geq$ 70:30 to $\leq$ 98:2, or $\geq$ 80:20 to $\leq$ 98:2.

Referring to FIG. 8, since the inner negative electrode active material layer INAL is subjected to a stronger compressive stress PR1 compared to the outer negative electrode active material layer ONAL, the volume change of silicon during charging and discharging can be reduced or suppressed even when a certain amount of silicon-based negative electrode active material is included.

The inner negative electrode active material layer INAL may further include a conductive material in addition to the negative electrode active material. In an example embodiment, the conductive material may include a linear carbon-based conductive material. For example, the linear carbon-based conductive material may include at least one of carbon nanotube (CNT), vapor-grown carbon fiber (VGCF), carbon nanofiber (CNF), or a combination thereof. The linear carbon-based conductive material can physically complement the expansion of the silicon particles to stabilize the structure of the silicon particles and improve the lifespan of the negative electrode.

In an example embodiment, the conductive material may include a sphere-type carbon-based conductive material together with a linear carbon-based conductive material. The sphere-type carbon-based conductive material may include, for example, carbon black, graphite powder, acetylene black, or a combination thereof.

Referring back to FIG. 8, the third negative electrode active material layer NAL3, which is located farthest from the winding center 50 (in FIG. 7) of the wound-type electrode assembly, is subjected to the smallest compressive stress PR1 and the largest tensile stress PR2, so that the risk of cracking and separation is higher than the risk of cracking and separation of the first and second negative electrode active material layers NAL1 and NAL2. Since the third negative electrode active material layer NAL3 includes only a small amount of silicon-based negative electrode active material or does not include any silicon-based negative electrode active material, the risk of cracking and separation of the third negative electrode active material layer NAL3 can be reduced, and the lifespan thereof can be improved.

The amount of the third carbon-based negative electrode active material in the third negative electrode active material layer NAL3 may be greater than the amount of the first carbon-based negative electrode active material in the first negative electrode active material layer NAL1, and may be greater than the amount of the second carbon-based negative-electrode active material in the second negative electrode active material layer NAL2. The amount of the third carbon-based negative electrode active material in the third negative electrode active material layer NAL3 may be greater than or equal to ≤ 90% by weight relative to the total weight of the third negative electrode active material layer NAL3. For example, the amount of the third carbon-based negative electrode active material may range from ≥ 90 wt % to ≤ 99 wt % or ≥ 95 wt % to ≤ 98 wt %.

The third negative electrode active material layer NAL3 may further include a third silicon-based negative electrode active material in addition to the third carbon-based negative electrode active material. The amount of the third silicon-based negative electrode active material in the third negative electrode active material layer NAL3 may be less than or equal to ≤ 5% by weight of the total weight of the third negative electrode active material layer NAL3. For example, the amount of the third silicon-based negative electrode active material may range from ≥ 0 wt % to ≤ 5 wt %, or ≥ 0 wt % to ≤ 2 wt %.

Referring back to FIG. 8, the second negative electrode active material layer NAL2 may be disposed between the negative electrode current collector COL2 and the third negative electrode active material layer NAL3. The second negative electrode active material layer NAL2 may include a second carbon-based negative electrode active material and a second silicon-based negative electrode active material.

The weight ratio of the second carbon-based negative electrode active material to the second silicon-based negative electrode active material in the second negative electrode active material layer NAL2 may range from ≥ 60:40 to ≤ 99:1, ≥ 70:30 to ≤ 98:2, or ≥ 80:20 to ≤ 98:2. Although the second negative electrode active material layer NAL2 is subjected to a smaller compressive stress PR1 than the first negative electrode active material layer NAL1, since the structurally stable negative electrode current collector COL2 and the third negative electrode active material layer NAL3 sandwich the second negative electrode active material layer NAL2, even when the second negative electrode active material layer NAL2 contains a certain amount of silicon, a volumetric change due to charging and discharging can be reduced or suppressed.

The second negative electrode active material layer NAL2 may further include a conductive material in addition to the negative electrode active material. In an example embodiment, the conductive material may include a linear carbon-based conductive material. The linear carbon-based conductive material can physically complement the expansion of the silicon particles to stabilize the structure of the silicon particles and improve the lifespan of the negative electrode. In an example embodiment, the conductive material may further include a sphere-type carbon-based conductive material.

The ratio of the thickness of the first negative electrode active material layer NAL1 to the thickness of the second negative electrode active material layer NAL2 may range from ≥ 2:1 to ≤ 1:2. The ratio of the thickness of the third negative electrode active material layer NAL3 to the thickness of the second negative electrode active material layer NAL2 may range from ≥ 1:1 to ≤ 2:1.

When the thickness ratio of the second negative electrode active material layer NAL2 and the third negative electrode active material layer NAL3 satisfies the aforementioned range, the outer negative electrode active material ONAL layer may have desired or improved capacity while reducing or suppressing volume expansion, thereby exhibiting improved lifespan characteristics. When the thickness ratio of each negative electrode active material layer satisfies the aforementioned range, the inner negative electrode active material INAL layer may have a larger capacity than the outer negative electrode active material layer ONAL. By increasing the capacity of the inner negative electrode active material layer INAL, which faces the outer positive electrode active material layer OCAL having a high loading level, a balance between the positive electrode active material layer and the negative electrode active material layer can be achieved, leading to improvements in rate capability and lifespan characteristics.

The negative electrode 20 included in the wound-type electrode assembly 40 according to the example embodiments of the present disclosure may exhibit desired or improved capacity and desired or improved dynamic characteristics by including the first and second negative electrode active material layers NAL1 and NAL2 having a relatively high amount of the silicon-based negative electrode active material. In addition, the negative electrode 20 according to the example embodiments of the present disclosure may achieve desired or improved lifespan characteristics by including the third negative electrode active material layer NAL3, which either does not contain silicon-based negative electrode active material, or contains only a small amount of silicon-based negative electrode active material. That is, in the negative electrode 20 according to the example embodiments of the present disclosure, different negative electrode active material layers may be formed on both surfaces of the negative electrode current collector COL2, thereby improving or maximizing the charge-discharge characteristics, the capacity characteristics, and the lifespan characteristics of the negative electrode 20.

The following description focuses on some example embodiments of the present disclosure. The following example embodiments are provided to aid in understanding of the present disclosure and are not intended to limit the scope of the present disclosure.

**Embodiment**

**Manufacture of First Negative Electrode Slurry:**

Graphite powder was prepared as a carbon-based negative electrode active material, and silicon-carbon composite (with a silicon-to-carbon weight ratio of 6:4) was prepared as a silicon-based negative electrode active material. The graphite powder and the silicon-carbon composite were mixed at a weight ratio of 86:14 to prepare a negative electrode active material. A mixture obtained by mixing styrene butadiene rubber (SBR) and carboxymethyl cellulose (CMC) at a weight ratio of 1.2:1 was prepared as a binder, and carbon nanotube (CNT) was prepared as a conductive material. The negative electrode active material, the binder, and the conductive material were mixed at a weight ratio of 97.75:2.20:0.05 to prepare a first negative electrode slurry.

**Manufacture of Second Negative Electrode Slurry:**

Graphite powder was prepared as a carbon-based negative electrode active material, and silicon-carbon composite (with a silicon-to-carbon weight ratio of 6:4) was prepared as a silicon-based negative electrode active material. The graphite powder and the silicon-carbon composite were mixed at a weight ratio of 99:1 to prepare a negative electrode active material. A mixture obtained by mixing styrene butadiene rubber (SBR) and carboxymethyl cellulose (CMC) at a weight ratio of 1.2:1 was prepared as a binder, and carbon black was prepared as a conductive material. The negative electrode active material, the binder, and the conductive material were mixed at a weight ratio of 97.75:2.20:0.05 to prepare a second negative electrode slurry.

**Manufacture of Negative Electrode:**

The first negative electrode slurry was simultaneously coated on both surfaces (upper surface, lower surface) of a copper foil current collector having a thickness of 10 $\mu$m to form a first negative electrode active material layer and a second negative electrode active material layer. The coated electrode plate was dried at 100° C for more than 1 hour. The coating was performed so that the thickness ratio between the first negative electrode active material layer (formed on the lower surface) and the second negative electrode active material layer (formed on the upper surface) was 1:1.

The second negative electrode slurry was coated on the second negative electrode active material layer to form a third negative electrode active material layer. The coated electrode plate was dried at 100° C for more than 1 hour and then pressurized to from a final negative electrode. In the final negative electrode, the ratio of the thickness of the third negative electrode active material layer to the thickness of the second negative electrode active material layer was 2:1.

**Manufacture of Positive Electrode:**

A positive electrode active material ($LiNi_{0.6}Co_{0.2}Mn_{0.2}O_2$), a carbon-based conductive material (Super P), and a PVDF (polyvinylidene fluoride) binder solution were added and mixed to prepare positive electrode slurry. The mixing ratio of positive electrode active material, conductive material, and binder in the positive electrode slurry was 98:1:1 by weight.

The positive electrode slurry was coated on both surfaces (upper surface, lower surface) of an aluminum current collector having a thickness of 12 $\mu$m, dried at 120° C for more than 1 hour, and then pressurized to form a positive electrode in which an inner positive electrode active material layer and an outer positive electrode active material layer were formed. The coating was performed so that the thickness ratio between the inner positive electrode active material layer (formed on the lower surface) and the outer positive electrode active material layer (formed on the upper surface) was 1:1.6.

**Manufacture of Wound-type Electrode Assembly:**

A 20 $\mu$m-thick polyethylene (PE) film (manufactured by Celgard) was prepared as a first separator, and a 12 $\mu$m-thick polyethylene (PE) film (manufactured by Celgard) was prepared as a second separator. The first separator was disposed between the outer positive electrode active material layer and the first negative electrode active material layer, and the second separator was disposed on the outer surface of the third negative electrode active material layer. Subsequently, the obtained positive electrode, the first separator, the obtained negative electrode, and the second separator were disposed in the following order: inner positive electrode active material layer / Al current collector / outer positive electrode active material layer / first separator / first negative electrode active material layer / Cu current collector / second negative electrode active material layer / third negative electrode active material layer / second separator. This structure was wound to form a jelly-roll-type electrode assembly.

**Manufacture of Rechargeable Lithium Battery:**

The manufactured electrode assembly was incorporated into a cylindrical case, and an electrolyte solution was injected to form a cylindrical lithium battery. The electrolyte solution was prepared by dissolving 1.5 M $LiPF_6$ lithium salt in a solvent mixture of ethylene carbonate (EC), ethyl methyl carbonate (EMC), and dimethyl carbonate (DMC) in a volume ratio of 2:1:7.

## Comparative Embodiment

**Manufacture of Negative Electrode Slurry:**

Graphite powder was prepared as a carbon-based negative electrode active material, and silicon-carbon composite (with a silicon-to-carbon weight ratio of 6:4) was prepared as a silicon-based negative electrode active material. The graphite powder and the silicon-carbon composite were mixed at a weight ratio of 92:8 to prepare a negative electrode active material. A mixture obtained by mixing styrene butadiene rubber (SBR) and carboxymethyl cellulose (CMC) at a weight ratio of 1.2:1 was prepared as a binder, and carbon nanotube (CNT) was prepared as a conductive material. The negative electrode active material, the binder, and the conductive material were mixed at a weight ratio of 97.75:2.20:0.05 to prepare a negative electrode slurry.

**Manufacture of Negative Electrode:**

The prepared negative electrode slurry was simultaneously coated on both surfaces (upper surface, lower surface) of a copper foil current collector having a thickness of 10 μm to form a first negative electrode active material layer and a second negative electrode active material layer. The coated electrode plate was dried at 100° C for more than 1 hour. The coating was performed so that the thickness ratio between the first negative electrode active material layer (formed on the lower surface) and the second negative electrode active material layer (formed on the upper surface) was 1:1. The dried plate was pressurized to from a final negative electrode.

**Manufacture of Rechargeable Lithium Battery:**

A positive electrode, a wound-type electrode assembly, and a lithium secondary battery were produced in the same manner as in Embodiment 1.

## Evaluation Example 1

The lifespan characteristics of the lithium batteries manufactured in the Embodiment and Comparative Embodiment were evaluated using the following method.
The rechargeable lithium batteries fabricated in the Embodiment and the Comparative Embodiment were each charged at 25°C with a constant current of 0.1C rate until the voltage reached 4.2V (vs. Li). Subsequently, charging was continued in a constant voltage mode, maintaining 4.2V while applying a cut-off at a current of 0.05C rate. Next, the battery was discharged with a constant current of 0.1C rate until the voltage reached 2.5V (vs. Li) (formation cycle). The rechargeable lithium battery that has undergone the formation process was charged at 25°C with a constant current of 0.33C rate until a voltage reached 4.2 V (vs. Li). Subsequently, the battery was discharged with a constant current of 1.0C rate until the voltage reached 2.5V (vs. Li), and this cycle was repeated under the same condition up to a 100th cycle (100 repetitions). A rest period of 10 minutes was applied after each charge/discharge cycle. The results of the charge/-discharge experiment are shown in Table 1 below. The capacity retention rate at the 100th cycle is defined by the following Equation 1.

Capacity Retention Rate (%) = (discharge capacity at $100^{th}$ cycle/ discharge capacity at $1^{st}$ cycle) $\times$ 100.

Equation 1:

Table 1:

| | Capacity Retention Rate [%] |
|---|---|
| Embodiment | 98.9 |
| Comparative Embodiment | 97 |

Referring to Table 1, it can be observed that the lithium battery according to the Embodiment exhibits a superior lifespan characteristics compared to the lithium battery according the Comparative Embodiment.

### Evaluation Example 2

The rate characteristics of the lithium batteries manufactured in the Embodiment and Comparative Embodiment were evaluated using the following method.

The rechargeable lithium batteries fabricated in the Embodiment and the Comparative Embodiment were each charged at 25°C with a constant current of 0.1C rate until the voltage reached 4.2V (vs. Li). Subsequently, charging was continued in a constant voltage mode, maintaining 4.2V while applying a cut-off at a current of 0.05C rate. Next, the battery was discharged with a constant current of 0.1C rate until the voltage reached 2.5V (vs. Li) (formation cycle). The rechargeable lithium battery that has undergone the formation process was charged and discharged once at each C-rate of 0.2C, 0.5C, 1C, 1.5C, and 2C at 25°C (charging voltage: 4.2V, discharging voltage: 2.5V). The discharge capacity at each C-rate was measured. The rate characteristics were evaluated according to Equation 2 below, and the results are shown in Table 2 below.

Rate characteristic (%) = (discharge capacity at each C-rate / discharge capacity at 0.2 C-rate) $\times$ 100.     Equation 2:

Table 2:

|  | Rate Characteristic (%) | | | | |
|---|---|---|---|---|---|
|  | 0.2C | 0.5C | 1.0C | 1.5C | 2.0C |
| Embodiment | 100 | 98.5 | 98.1 | 98.5 | 98.5 |
| Comparative Embodiment | 100 | 98.1 | 97.7 | 97.5 | 96.9 |

Referring to Table 2, it can be observed that the lithium battery according to the Embodiment exhibits desired or improved capacity retention characteristics and is particularly desired or improved at a high rate.

The negative electrode for a rechargeable lithium battery according to the present disclosure may have improved dynamic characteristics and lifespan characteristics by including a negative electrode active material layer having an asymmetric structure on both surfaces of a negative electrode current collector. The lithium secondary battery according to the present disclosure may have desired or improved dynamic characteristics and desired or improved lifespan characteristics.

While the present disclosure has been described with reference to example embodiments, it should be understood that these example embodiments are provided for illustrative purposes only and do not limit the scope of the present disclosure. Various modifications and equivalent arrangements may be made without departing from the spirit and scope of the appended claims. Accordingly, the described embodiments should be regarded as examples rather than limitations of the present disclosure.

**Claims**

1. A negative electrode (20) for a rechargeable lithium battery (100), the negative electrode (20) comprising:

   a negative electrode current collector;
   a first negative electrode active material layer (NAL1) on a first surface of the negative electrode current collector; and
   a second negative electrode active material layer (NAL2) and a third negative electrode active material layer (NAL3) stacked on a second surface of the negative electrode current collector,
   wherein the first negative electrode active material layer (NAL1) comprises a first carbon-based negative electrode active material and a first silicon-based negative electrode active material,
   wherein the second negative electrode active material layer (NAL2) comprises a second carbon-based negative electrode active material and a second silicon-based negative electrode active material,
   wherein the third negative electrode active material layer (NAL3) comprises a third carbon-based negative electrode active material,
   wherein an amount of the third carbon-based negative electrode active material in the third negative electrode active material layer (NAL3) is greater than an amount of the first carbon-based negative electrode active material in the first negative electrode active material layer (NAL1), and

wherein the amount of the third carbon-based negative electrode active material in the third negative electrode active material layer (NAL3) is greater than an amount of the second carbon-based negative electrode active material in the second negative electrode active material layer (NAL2).

2.  The negative electrode (20) of claim 1,
    wherein the amount of the third carbon-based negative electrode active material in the third negative electrode active material layer (NAL3) is in a range of ≥ 90 wt % to ≤ 99 wt %.

3.  The negative electrode (20) of claim 1 or 2,

    wherein the third negative electrode active material layer (NAL3) further comprises a third silicon-based negative electrode active material, and
    wherein an amount of the third silicon-based negative electrode active material in the third negative electrode active material layer (NAL3) is 2 wt % or less.

4.  The negative electrode (20) of any of the claims 1 to 3,
    wherein a weight ratio of the first carbon-based negative electrode active material to the first silicon-based negative electrode active material in the first negative electrode active material layer (NAL1) is in a range of ≥ 80:20 to ≤ 98:2.

5.  The negative electrode (20) of any of the claims 1 to 4,
    wherein a weight ratio of the second carbon-based negative electrode active material to the second silicon-based negative electrode active material in the second negative electrode active material layer (NAL2) is in a range of ≥ 80:20 to ≤ 98:2.

6.  The negative electrode (20) of any of the claims 1 to 5,

    wherein each of the first and second negative electrode active material layers (NAL1;NAL2) further comprises a conductive material, and
    wherein the conductive material comprises a linear carbon-based conductive material.

7.  The negative electrode (20) of any of the claims 1 to 6,

    wherein an amount of the linear carbon-based conductive material in the first negative electrode active material layer (NAL1) is in a range of ≥ 0.01 wt % to ≤ 1 wt %, and
    wherein an amount of the linear carbon-based conductive material in the second negative electrode active material layer (NAL2) is in a range of ≥ 0.01 wt % to ≤ 1 wt %.

8.  The negative electrode (20) of any of the claims 1 to 7,
    wherein a ratio of a thickness of the first negative electrode active material layer (NAL1) to a thickness of the second negative electrode active material layer (NAL2) is in a range of ≥ 2:1 to ≤ 1:2.

9.  The negative electrode (20) of any of the claims 1 to 8,
    wherein a ratio of a thickness of the third negative electrode active material layer (NAL3) to a thickness of the second negative electrode active material layer (NAL2) is in a range of ≥ 2:1 to ≤ 1:1.

10. The negative electrode (20) of any of the claims 1 to 9,
    wherein at least one of the first, second, and third negative electrode active material layer (NAL3)s further comprises a binder.

11. A wound-type electrode assembly comprising, the negative electrode (20) of claim 1,
    a positive electrode (10), and a separator (30) between the positive electrode (10) and the negative electrode (20).

12. The wound-type electrode assembly of claim 11,
    wherein the amount of the third carbon-based negative electrode active material in the third negative electrode active material layer (NAL3) is in a range of ≥ 90 wt % to ≤ 99 wt %.

**13.** The wound-type electrode assembly of claim 11 or 12,

wherein a weight ratio of the first carbon-based negative electrode active material to the first silicon-based negative electrode active material in the first negative electrode active material layer (NAL1) is in a range of $\geq$ 80:20 to $\leq$ 98:2, and
wherein a weight ratio of the second carbon-based negative electrode active material to the second silicon-based negative electrode active material in the second negative electrode active material layer (NAL2) is in a range of $\geq$ 80:20 to $\leq$ 98:2.

**14.** The wound-type electrode assembly of any of the claims 11 to 13,

wherein the third negative electrode active material layer (NAL3) is positioned farther from a winding center of the electrode assembly than the second negative electrode active material layer (NAL2), and
wherein the second negative electrode active material layer (NAL2) is positioned farther from a winding center of the electrode assembly than the first negative electrode active material layer (NAL1).

**15.** The wound-type electrode assembly of any of the claims 11 to 14,
wherein the positive electrode (10) comprises:

a positive electrode current collector;
an inner positive electrode active material layer on a first surface of the positive electrode current collector; and
an outer positive electrode active material layer on a second surface of the positive electrode current collector, wherein the outer positive electrode active material layer is positioned farther from a winding center of the electrode assembly than the inner positive electrode active material layer.

# FIG. 1

# FIG. 2

FIG. 3

# FIG. 4

# FIG. 5

# FIG. 6

# FIG. 7

34    20    32    10    50

40

D3 ← D1

AML1 { ICAL, OCAL }    AML2 { INAL, ONAL }    30 { 32, 34 }

ICAL   COL1   OCAL   INAL   COL2   ONAL   ICAL   COL1   OCAL   INAL   COL2   ONAL

10   32   20   34   10   32   20   34

EP 4 752 958 A1

# FIG. 8

Europäisches Patentamt
European Patent Office
Office européen des brevets

# EUROPEAN SEARCH REPORT

Application Number

EP 25 21 9328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/006588 A1 (KIM JEONG A [KR] ET AL) 4 January 2024 (2024-01-04) | 1-10 | INV. H01M4/133 |
| Y | * paragraphs [0033], [0074] * * paragraphs [0012], [0020], [0022], [0061]; claim 11 * * paragraphs [0014], [0019]; examples 1, comparative example 1; tables 4, 5 * * paragraphs [0014], [0019], [0022] * * paragraphs [0014], [0019] * * paragraphs [0012], [0014] * * paragraph [0059] * * paragraph [0022] * | 11-15 | H01M4/134 H01M4/1393 H01M4/1395 H01M4/36 H01M4/38 H01M4/587 H01M4/62 H01M10/04 H01M10/0525 H01M10/0587 |
| Y | US 2015/340731 A1 (KIM BO-HYUN [KR] ET AL) 26 November 2015 (2015-11-26) | 11-15 | ADD. H01M4/02 |
| A | * paragraphs [0012], [0014] - [0018], [0039], [0040]; claim 1; figures 2b, 3, 4 * * paragraphs [0104], [0105] * * paragraph [0110] * * paragraph [0095] * * paragraphs [0039], [0044] - [0046] * | 1-10 | |
| A | EP 4 084 127 B1 (NINGDE AMPEREX TECHNOLOGY LTD [CN]) 11 September 2024 (2024-09-11) * paragraphs [0004] - [0015], [0023] - [0026]; figures 2, 3 * | 1-15 | TECHNICAL FIELDS SEARCHED (IPC) H01M |
| A | KR 2020 0046634 A (LG CHEMICAL LTD [KR]) 7 May 2020 (2020-05-07) * paragraphs [0001] - [0006]; figures 2, 4, 5 * | 1-15 | |

The present search report has been drawn up for all claims

| Place of search | Date of completion of the search | Examiner |
|---|---|---|
| The Hague | 17 February 2026 | Martin, Andréa |

## ANNEX TO THE EUROPEAN SEARCH REPORT
## ON EUROPEAN PATENT APPLICATION NO.

EP 25 21 9328

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | | Publication date | Patent family member(s) | | Publication date |
|---|---|---|---|---|---|
| US 2024006588 | A1 | 04-01-2024 | KR | 20240003992 A | 11-01-2024 |
| | | | US | 2024006588 A1 | 04-01-2024 |
| US 2015340731 | A1 | 26-11-2015 | KR | 20150134162 A | 01-12-2015 |
| | | | US | 2015340731 A1 | 26-11-2015 |
| EP 4084127 | B1 | 11-09-2024 | CN | 113078293 A | 06-07-2021 |
| | | | EP | 4084127 A2 | 02-11-2022 |
| KR 20200046634 | A | 07-05-2020 | NONE | | |

EPO FORM P0459

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240175248